# FASCICULE DE BREVET EUROPEEN

(11) **EP 3 539 093 B1**
(45) Date de publication et mention de la délivrance du brevet: **17.02.2021**
(21) Numéro de dépôt: 17801396.7
(22) Date de dépôt: 09.11.2017
(51) Int. Cl.: G08B 13/08, G08B 25/10, H04L 12/28

(54) **PROCEDE ET SYSTEME D'ASSOCIATION D'UN DISPOSITIF DE DETECTION D'UNE POSITION D'UN DISPOSITIF DE MISE D'UNE FENETRE DANS AU MOINS DEUX ETATS DIFFERENTS, A UN DISPOSITIF DISTANT**
VERFAHREN UND SYSTEM ZUR ZUORDNUNG EINER VORRICHTUNG ZUR DETEKTION EINER POSITION EINER VORRICHTUNG ZUR VERSETZUNG EINES FENSTERS IN MINDESTENS ZWEI VERSCHIEDENE ZUSTÄNDE, ZU EINER ENTFERNTEN VORRICHTUNG
METHOD AND SYSTEM FOR ASSOCIATING A DEVICE FOR DETECTING A POSITION OF A DEVICE FOR SETTING A WINDOW IN AT LEAST TWO DIFFERENT STATES, TO A REMOTE DEVICE

(30) Priorité: 10.11.2016 FR 1660884
(43) Date de publication de la demande: 18.09.2019
(73) Titulaire: Delta Dore, 35270 Bonnemain (FR)
(72) Inventeur: FORTINEAU, François, 35270 Bonnemain (FR); GARNACHE, Grégory, 35270 Bonnemain (FR)
(74) Mandataire: Cabinet Le Guen Maillet
(86) Numéro de dépôt international: PCT/EP2017/078773
(87) Numéro de publication internationale: WO 2018/087233

(56) Documents cités:
- EP-A1- 2 267 744
- WO-A1-2013/064464
- US-A1- 2013 215 902

## Description

La présente invention concerne un procédé et un système d'association d'un dispositif de détection d'une position d'un dispositif de mise d'une fenêtre dans au moins deux états différents à un dispositif distant.

Les ouvertures telles que les fenêtres offrent différentes possibilités d'ouverture.

Par exemple, il existe des fenêtres disposant d'un mécanisme d'ouverture à la française, à l'anglaise, à soufflet ou combinant deux mécanismes d'ouverture comme par exemple les fenêtres oscillo-battantes.

Les fenêtres à la française sont équipées d'ouvrants en vantail pivotant verticalement sur leur bord vers l'intérieur, avec charnières sur le dormant. Elles sont souvent complétées par un châssis fixe horizontal situé sous le vantail ouvrant.

Les fenêtres oscillo-battantes peuvent s'ouvrir par basculement sur un axe horizontal, dit à soufflet, ou sur un axe vertical à la française. Le basculement sur un axe horizontal permet en particulier l'entrebâillement par le haut.

La fenêtre oscillo-battante peut être actionnée de deux manières, selon un système traditionnel, semblable aux fenêtres à la française et par des charnières horizontales permettant au battant de s'ouvrir vers l'intérieur et de permettre un renouvellement de l'air rapide, tout en ne laissant pas pénétrer un individu. De nombreuses habitations sont équipées de passerelles domotiques permettant aux résidents de l'habitation de connaître et/ou de superviser l'état dans lequel se trouvent les équipements domotiques du bâtiment.

De nombreuses habitations sont équipées de centrales d'alarme permettant de notifier aux habitants du bâtiment une tentative d'intrusion d'un individu dans le bâtiment.

Certaines de ces habitations disposent à la fois d'une passerelle domotique et d'une centrale d'alarme.

Bien souvent, l'individu tente de s'introduire dans le bâtiment en profitant de l'ouverture d'une fenêtre du bâtiment.

Connaître l'état dans lequel se trouve une fenêtre d'un bâtiment est une fonctionnalité qui tend à devenir essentielle.

Un bâtiment comporte une pluralité d'ouvertures. Chaque ouverture doit être ainsi équipée d'un dispositif de détection de l'état de l'ouverture. Ceci rend parfois l'installation de tels dispositifs coûteuse de par le nombre de dispositifs de détection de l'état d'une ouverture devant être installés. Chaque dispositif de détection de l'état de l'ouverture doit être connu et associé au dispositif gérant le bâtiment.

Classiquement, une association de deux dispositifs est effectuée par l'intermédiaire d'interrupteurs dédiés. Ces interrupteurs augmentent de manière non négligeable le prix de l'installation et parfois, du fait de la localisation du dispositif, sont peu accessibles pour le résident ou l'installateur.

Les demandes de brevet US 2013/215902 et WO 2013/064464 divulguent un procédé d'association.

La présente invention a pour but de résoudre les inconvénients de l'art antérieur en proposant un procédé et un système d'association d'un dispositif de détection d'une position d'un dispositif de mise d'une fenêtre dans au moins deux états différents à un dispositif distant dans lequel l'association est effectuée sans besoin d'ajout de composants supplémentaires au niveau du dispositif de détection d'une position d'un dispositif de mise d'une fenêtre dans au moins deux états différents.

A cette fin, selon un premier aspect, l'invention propose un procédé d'association d'un dispositif de détection d'une position d'un dispositif de mise d'une fenêtre dans au moins deux états différents à un dispositif distant par l'intermédiaire d'une liaison radio, caractérisé en ce que le procédé comporte les étapes de :
- mise du dispositif distant dans un mode d'association,
- détection, par le dispositif de détection d'une position d'un dispositif de mise d'une fenêtre dans au moins deux états différents, d'une première position du dispositif de mise d'une fenêtre dans au moins deux états différents correspondant au verrouillage de la fenêtre,
- activation, par le dispositif de détection d'une position d'un dispositif de mise d'une fenêtre dans au moins deux états différents, d'une temporisation d'une durée prédéterminée,
- détection, par le dispositif de détection d'une position d'un dispositif de mise d'une fenêtre dans au moins deux états différents, d'une position différente de la position correspondant au verrouillage de la fenêtre,
- transfert d'une trame comportant l'identifiant du dispositif de détection de la position d'un dispositif de mise d'une fenêtre dans au moins deux états différents et une information représentative d'une requête d'association avec le dispositif distant si la détection de la position correspondant au verrouillage de la fenêtre et si la détection de la position différente de la position correspondant au verrouillage de la fenêtre sont effectuées au moins trois fois consécutives pendant la durée prédéterminée,
- réception, par le dispositif distant, de la trame,
- association du dispositif de détection de la position d'un dispositif de mise d'une fenêtre dans au moins deux états avec le dispositif distant.

L'invention concerne aussi un système d'association d'un dispositif de détection d'une position d'un dispositif de mise d'une fenêtre dans au moins deux états différents à un dispositif distant par l'intermédiaire d'une liaison radio, caractérisé en ce que le système comporte :
- des moyens, compris dans le dispositif distant, de mise du dispositif distant dans un mode d'association,
- des moyens, compris dans le dispositif de détection d'une position d'un dispositif de mise d'une fenêtre dans au moins deux états différents, de détection d'une première position du dispositif de mise d'une fenêtre dans au moins deux états différents correspondant au verrouillage de la fenêtre,
- des moyens, compris dans le dispositif de détection d'une position d'un dispositif de mise d'une fenêtre dans au moins deux états différents, d'activation d'une temporisation d'une durée prédéterminée,
- des moyens, compris dans le dispositif de détection d'une position d'un dispositif de mise d'une fenêtre dans au moins deux états différents, de détection d'une position différente de la position correspondant au verrouillage de la fenêtre,
- des moyens, compris dans le dispositif de détection d'une position d'un dispositif de mise d'une fenêtre dans au moins deux états différents, de transfert d'une la trame comportant l'identifiant du dispositif de détection de la position d'un dispositif de mise d'une fenêtre dans au moins deux états différents et une information représentative d'une requête d'association avec le dispositif distant si la détection de la position correspondant au verrouillage de la fenêtre et si la détection de la position différente de la position correspondant au verrouillage de la fenêtre sont effectuées au moins trois fois consécutives pendant la durée prédéterminée,
- des moyens, compris dans le dispositif distant, de réception de la trame,
- des moyens, compris dans le dispositif distant, d'association du dispositif de détection de la position d'un dispositif de mise d'une fenêtre dans au moins deux états avec le dispositif distant.

Ainsi, il est possible d'associer un dispositif de détection d'une position d'un dispositif de mise d'une fenêtre dans au moins deux états différents à un dispositif distant dans lequel l'association est effectuée sans besoin d'ajout de composants supplémentaires au niveau du dispositif de détection d'une position d'un dispositif de mise d'une fenêtre dans au moins deux états différents.

Selon un mode particulier de l'invention, la fenêtre est une fenêtre oscillo-battante, le dispositif de détection d'une position d'un dispositif de mise d'une fenêtre dans au moins deux états différents détecte trois positions du dispositif de mise d'une fenêtre dans au moins trois états différents, un premier état correspondant au verrouillage de la fenêtre, un second état correspondant à une ouverture à la française, un troisième état correspondant à une ouverture en soufflet.

Ainsi, il est possible de connaître l'état de la fenêtre oscillo-battante. Ceci est particulièrement intéressant pour éviter toute éventuelle tentative d'intrusion. En effet, seulement lorsque la fenêtre est dans le mode d'ouverture à la française, un individu peut pénétrer dans le bâtiment par celle-ci. Il est donc important de pouvoir distinguer cet état des autres états possibles de la fenêtre oscillo-battante.

Selon un mode particulier de l'invention, le dispositif distant est une centrale d'alarme et le procédé comporte en outre les étapes de :
- réception, par la centrale d'alarme, d'une trame par l'intermédiaire d'un module radio de la centrale d'alarme, la trame étant transférée par le dispositif de détection de la position d'un dispositif de mise d'une fenêtre dans au moins trois états différents et comprenant un identifiant du dispositif de détection de la position d'un dispositif de mise d'une fenêtre dans au moins trois états différents ainsi que la position du dispositif de mise de la fenêtre dans au moins trois états différents,
- mémorisation, par la centrale d'alarme, de l'identifiant du dispositif de détection de l'état de la fenêtre et de la position du dispositif de mise de la fenêtre dans au moins trois états différents,
- détection, par la centrale d'alarme, d'une requête de mise de la centrale d'alarme dans un mode de surveillance d'un bâtiment comprenant la fenêtre,
- lecture de la position mémorisée,
- activation, par la centrale d'alarme, du mode de surveillance du bâtiment si la position mémorisée correspond au premier ou au troisième état,
- transfert, par la centrale d'alarme, d'un message à au moins un résident du bâtiment d'un message identifiant le dispositif de détection de la position d'un dispositif de mise d'une fenêtre dans au moins trois états différents si la position mémorisée correspond au second état.

Ainsi, il est possible de connaître l'état de la fenêtre oscillo-battante. Ceci est particulièrement intéressant pour éviter toute éventuelle tentative d'intrusion. En effet, seulement lorsque la fenêtre est dans le mode d'ouverture à la française, un individu peut pénétrer dans le bâtiment par celle-ci. Il est donc important de pouvoir distinguer cet état des autres états possibles de la fenêtre oscillo-battante.

Selon un mode particulier de l'invention, le dispositif distant est une passerelle domotique et le procédé comporte en outre les étapes de :
- réception, par la passerelle domotique, d'une trame par l'intermédiaire d'un module radio de la centrale d'alarme, la trame étant transférée par le dispositif de détection de la position d'un dispositif de mise d'une fenêtre dans au moins trois états différents et comprenant un identifiant du dispositif de détection de la position d'un dispositif de mise d'une fenêtre dans au moins trois états différents ainsi que la position du dispositif de mise de la fenêtre dans au moins trois états différents,
- mémorisation, par la centrale domotique, de l'identifiant du dispositif de détection de l'état de la fenêtre et de la position du dispositif de mise de la fenêtre dans au moins trois états différents,
- réception d'une requête d'obtention de la position d'un dispositif de mise d'une fenêtre dans au moins trois états différents,
- transfert d'une information identifiant le dispositif de détection de la position d'un dispositif de mise d'une fenêtre dans au moins trois états différents ainsi que de la position du dispositif de mise de la fenêtre dans au moins trois états différents mémorisée.

Ainsi, il est possible de notifier à un résident du bâtiment l'état dans lequel se trouve la fenêtre.

Selon un mode particulier de l'invention, la requête d'obtention de la position d'un dispositif de mise d'une fenêtre dans au moins trois états différents est reçue d'un téléphone mobile intelligent et l'information identifiant le dispositif de détection de la position d'un dispositif de mise d'une fenêtre dans au moins trois états différents ainsi que la position du dispositif de mise de la fenêtre dans au moins trois états différents mémorisée sont transférées au téléphone mobile intelligent.

Ainsi, le résident du bâtiment peut connaître à tout instant la position dans lequel se trouve la fenêtre.

Selon un mode particulier de l'invention, préalablement au transfert de chaque trame, le procédé comporte les étapes de :
- détection, par le dispositif de détection de la position du dispositif de mise d'une fenêtre dans au moins trois états différents, d'une modification de la position de l'élément mobile,
- activation, par le dispositif de détection de la position d'un dispositif de mise d'une fenêtre dans au moins trois états différents, du module radio du dispositif de détection de la position d'un dispositif de mise d'une fenêtre dans au moins trois états différents avant le transfert de la trame si une modification de la position de l'élément mobile est détectée,
- désactivation, par le dispositif de détection de l'état de la fenêtre dispositif de détection de l'état de la fenêtre, du module radio du dispositif de détection de la position d'un dispositif de mise d'une fenêtre dans au moins trois états différents après le transfert de la trame.

Ainsi, la consommation en énergie électrique du dispositif de détection de la position du dispositif de mise d'une fenêtre dans au moins trois états différents est réduite. L'autonomie de l'alimentation en énergie électrique du dispositif de détection de la position du dispositif de mise d'une fenêtre dans au moins trois états différents est accrue. Selon un mode particulier de l'invention, le dispositif de détection de la position du dispositif de mise de la fenêtre dans au moins trois états différents comporte trois capteurs.

Selon un mode particulier de l'invention, l'élément mobile est un aimant et les capteurs sont des interrupteurs à lame souple, chaque interrupteur à lame souple autorisant ou non un contact électrique selon que l'aimant est à proximité ou non de l'interrupteur à lame souple.

Selon un mode particulier de l'invention, les moyens de détection, par le dispositif de détection de la position du dispositif de mise de la fenêtre dans au moins trois états différents, d'une modification de la position de l'élément mobile comportent des moyens de mémorisation d'une position de l'élément mobile obtenue antérieurement à la position obtenue et de comparaison de la position obtenue à la position de l'élément mobile obtenue antérieurement à la position obtenue.

Selon un mode particulier de l'invention, les positions prises par l'aimant en fonction de la position du dispositif de mise de la fenêtre dans les au moins trois états différents sont parallèles à un plan sur lequel les interrupteurs à lame souple sont disposés, une première position provoquant un contact électrique pour chaque interrupteur à lame souple, une seconde position provoquant un contact électrique pour uniquement deux interrupteurs à lame souple, une troisième position provoquant un contact électrique pour uniquement un seul interrupteur à lame souple.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un bâtiment dans lequel la présente invention est implémentée ;
la Fig. 2 représente une ouverture d'un bâtiment équipée d'un dispositif de détection de la position d'un dispositif de mise d'une fenêtre dans au moins trois états différents selon la présente invention ;
la Fig. 3 représente un exemple d'architecture d'une centrale d'alarme du bâtiment qui est apte à interpréter des messages reçus du dispositif de détection de la position d'un dispositif de mise d'une fenêtre dans au moins trois états différents selon la présente invention ;
la Fig. 4 représente un exemple d'architecture d'un dispositif de détection de la position d'un dispositif de mise d'une fenêtre dans au moins trois états différents selon la présente invention ;
la Fig. 5 représente un exemple d'architecture d'une passerelle domotique du bâtiment qui est apte à interpréter des messages reçus du dispositif de détection de la position d'un dispositif de mise d'une fenêtre dans au moins trois états différents selon la présente invention ;
les Figs. 6 représentent les différentes positions prises par un élément mobile placé sur l'ouvrant de la fenêtre par rapport à des capteurs compris dans le dispositif de détection de la position d'un dispositif de mise d'une fenêtre dans au moins trois états différents selon la présente invention ;
la Fig. 7 représente un algorithme, exécuté par le dispositif de détection de la position d'un dispositif de mise d'une fenêtre dans au moins trois états différents selon la présente invention ;
la Fig. 8 représente un algorithme, exécuté par la centrale d'alarme du bâtiment, pour le traitement des messages reçus du dispositif de détection de la position d'un dispositif de mise d'une fenêtre dans au moins trois états différents selon la présente invention ;
la Fig. 9 représente un algorithme, exécuté par la passerelle domotique du bâtiment, pour le traitement des messages reçus du dispositif de détection de la position d'un dispositif de mise d'une fenêtre dans au moins trois états différents selon la présente invention.

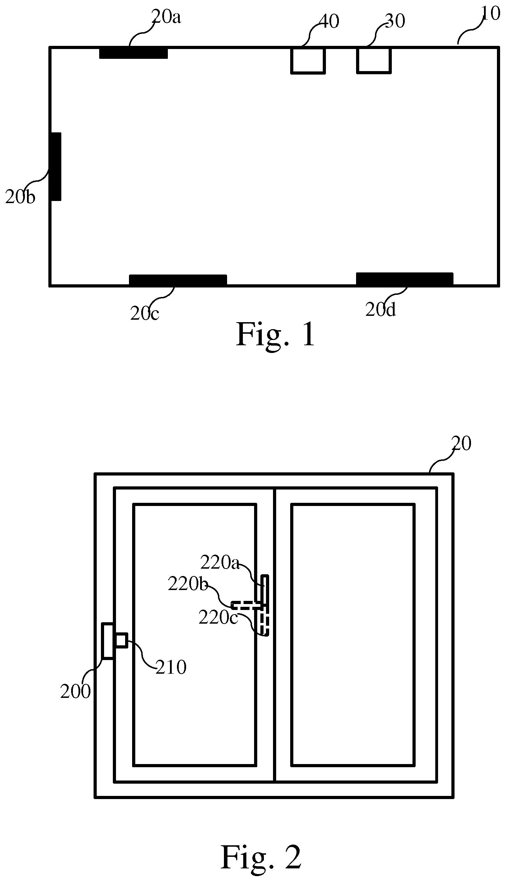

La **Fig. 1** représente un bâtiment dans lequel la présente invention est implémentée.

Dans l'exemple de la Fig. 1, le bâtiment est équipé de quatre fenêtres notées 20a, 20b, 20c et 20d pouvant prendre au moins deux positions.

Plus particulièrement, les quatre fenêtres sont des fenêtres oscillo-battantes pouvant prendre au moins trois positions. Chaque fenêtre est équipée d'un dispositif de détection de la position d'un dispositif de mise d'une fenêtre dans au moins trois états différents.

Le bâtiment comporte une centrale d'alarme 30 du bâtiment qui est apte à interpréter des messages reçus de chaque dispositif de détection de la position d'un dispositif de mise d'une fenêtre dans au moins trois états différents selon la présente invention.

La centrale d'alarme 30 est reliée aux dispositifs de détection de la position d'un dispositif de mise d'une fenêtre dans au moins trois états différents, par exemple par l'intermédiaire d'une liaison radio.

La centrale d'alarme 30 comporte des moyens de notification à au moins un résident du bâtiment de la position dans lequel chaque dispositif de mise d'une fenêtre dans au moins trois états différents se trouve.

Les moyens de notification sont par exemple un écran de la centrale d'alarme ou une liaison vers un dispositif tel qu'un téléphone mobile intelligent permettant de notifier à l'utilisateur du téléphone mobile l'état de chaque fenêtre 20.

Le bâtiment comporte une passerelle domotique 40 du bâtiment qui est apte à interpréter des messages reçus de chaque dispositif de détection de la position d'un dispositif de mise d'une fenêtre dans au moins trois états différents selon la présente invention.

La passerelle domotique 40 est reliée aux dispositifs de détection de la position d'un dispositif de mise d'une fenêtre dans au moins trois états différents, par exemple par l'intermédiaire d'une liaison radio.

La passerelle domotique 40 comporte des moyens de notification à au moins un résident du bâtiment de la position dans lequel chaque dispositif de mise d'une fenêtre dans au moins trois états différents se trouve.

Les moyens de notification sont par exemple une liaison vers un dispositif tel qu'un téléphone mobile intelligent permettant de notifier à l'utilisateur du téléphone mobile l'état de chaque fenêtre 20.

Selon la présente invention :
- la centrale d'alarme 30 ou la passerelle domotique 40 détermine un mode d'association,
- le dispositif de détection d'une position d'un dispositif de mise d'une fenêtre dans au moins deux états différents détecte une première position du dispositif de mise d'une fenêtre dans au moins deux états différents correspondant au verrouillage de la fenêtre,
- le dispositif de détection d'une position d'un dispositif de mise d'une fenêtre dans au moins deux états différents active une temporisation d'une durée prédéterminée,
- le dispositif de détection d'une position d'un dispositif de mise d'une fenêtre dans au moins deux états différents détecte une position différente de la position correspondant au verrouillage de la fenêtre,
- le dispositif de détection d'une position d'un dispositif de mise d'une fenêtre dans au moins deux états différents transfère une trame comportant l'identifiant du dispositif de détection de la position d'un dispositif de mise d'une fenêtre dans au moins deux états différents et une information représentative d'une requête d'association avec le dispositif distant si la détection de la position correspondant au verrouillage de la fenêtre et si la détection de la position différente de la position correspondant au verrouillage de la fenêtre sont effectuées au moins trois fois consécutives pendant la durée prédéterminée,
   - la centrale d'alarme 30 ou la passerelle domotique 40 reçoit la trame,
   - la centrale d'alarme 30 ou la passerelle domotique 40 associe le dispositif de détection de la position d'un dispositif de mise d'une fenêtre dans au moins deux états avec celle-ci.

La **Fig. 2** représente une ouverture d'un bâtiment équipée d'un dispositif de détection de la position d'un dispositif de mise d'une fenêtre dans au moins trois états différents selon la présente invention.

Chaque fenêtre 20 est une fenêtre oscillo-battante.

Le système oscillant permet d'ouvrir la fenêtre par basculement du battant vers l'intérieur, dans sa partie haute. Les charnières verticales sont laissées inactives, tandis que le battant est retenu par un bras mécanique sur la partie haute de la fenêtre. Cela empêche toute intrusion de l'extérieur tout en laissant libre le passage de l'air. Ce type de fenêtre est particulièrement répandu au sein des immeubles d'habitation, car le système oscillant évite tout cambriolage tout en garantissant une aération.

Chaque fenêtre 20 comporte un dispositif de mise d'une fenêtre dans au moins trois états différents.

Le dispositif de mise de la fenêtre dans au moins trois états différents prend une position différente pour trois états différents de la fenêtre 20.

Lorsque le dispositif de mise de la fenêtre dans au moins trois états différents est dans la position notée 220a en Fig. 2, la fenêtre est dans une position d'ouverture en soufflet soit un basculement du battant vers l'intérieur, dans sa partie haute.

Lorsque le dispositif de mise de la fenêtre dans au moins trois états différents est dans la position notée 220b en Fig. 2, la fenêtre est ouverte à la française.

Lorsque le dispositif de mise de la fenêtre dans au moins trois états différents est dans la position notée 220c en Fig.2, la fenêtre est verrouillée, c'est-à-dire fermée.

Chaque fenêtre 20 comporte un dispositif 200 de détection de la position d'un dispositif de mise d'une fenêtre dans au moins trois états différents.

Chaque dispositif 200 de détection de la position d'un dispositif de mise d'une fenêtre dans au moins trois états différents est disposé sur le dormant de la fenêtre et comprend des capteurs qui sont aptes à détecter la position d'un élément mobile 210 placé sur l'ouvrant de la fenêtre.

L'élément mobile est couplé mécaniquement au dispositif de mise de la fenêtre dans au moins trois états différents et prend différentes positions en fonction de la position du dispositif de mise de la fenêtre dans au moins trois états différents.

Le couplage mécanique est par exemple assuré par une tringle mobile de la crémone de la fenêtre.

L'élément mobile est par exemple un aimant et chaque capteur est par exemple un interrupteur à lame souple (ILS) qui autorise ou non un contact électrique selon que l'aimant est à proximité ou non du capteur.

L'élément mobile est par exemple un élément réfléchissant un signal optique et chaque capteur est par exemple un opto-coupleur qui détecte ou non une réflexion d'un signal optique par l'élément réfléchissant selon que l'élément est à proximité ou non de l'opto-coupleur.

L'élément mobile est par exemple un élément métallique et chaque capteur est par exemple un capteur inductif qui détecte ou non la présence de l'élément métallique par couplage inductif.

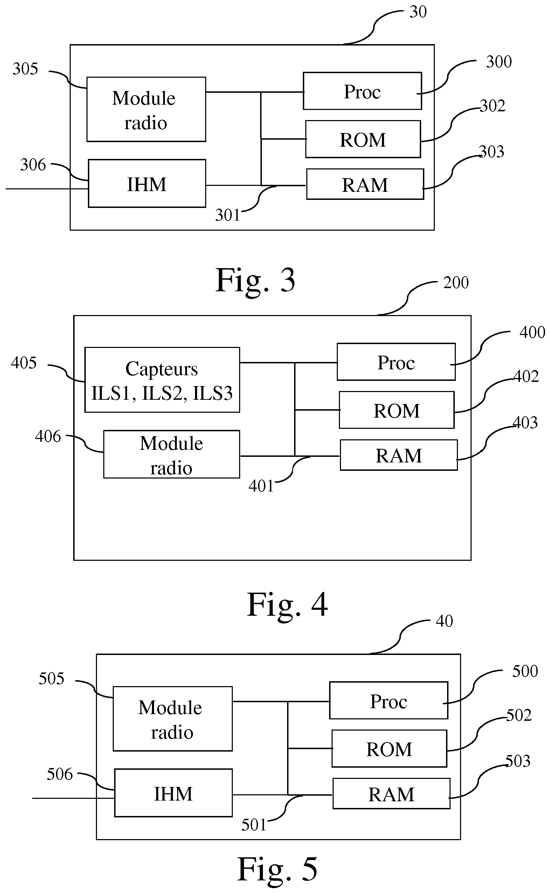

La **Fig. 3** représente un exemple d'architecture d'une centrale d'alarme du bâtiment qui est apte à interpréter des messages reçus du dispositif de détection de la position d'un dispositif de mise d'une fenêtre dans au moins trois états différents selon la présente invention.

La centrale d'alarme30 comprend :
- un processeur, micro-processeur, ou microcontrôleur 300 ;
- une mémoire volatile 303 ;
- une mémoire non volatile 302 ;
- un module radio 305 ;
- une interface homme machine 306 ;
- un bus de communication 301 reliant le processeur 300 à la mémoire ROM 303, à la mémoire RAM 303, le module radio 305 et l'interface homme machine 306.

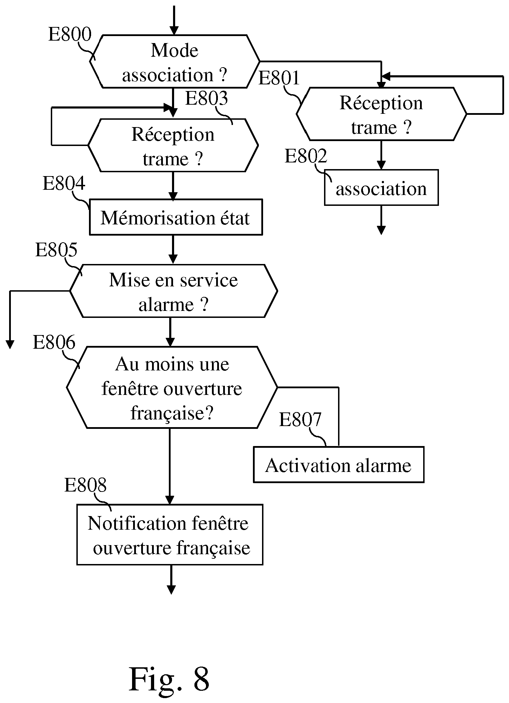

Le processeur 300 est capable d'exécuter des instructions chargées dans la mémoire volatile 303 à partir de la mémoire non volatile 302, d'un support de stockage, tel qu'une carte SD ou autre, ou d'un réseau de communication. Lorsque la centrale d'alarme 30 est mise sous tension, le processeur 300 est capable de lire de la mémoire volatile 303 des instructions et de les exécuter. Ces instructions forment un programme d'ordinateur qui cause la mise en œuvre, par le processeur 300, de tout ou partie du procédé décrit en relation avec la Fig. 8.

Tout ou partie du procédé décrit en relation avec la Fig. 8 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Le module radio 305 permet de recevoir des messages, entre autres, de chaque dispositif 200 de détection de la position d'un dispositif de mise d'une fenêtre dans au moins trois états différents.

L'interface homme machine 306 comporte des moyens de notification à au moins un habitant du bâtiment de l'état dans lequel chaque ouverture se trouve.

Les moyens de notifications sont par exemple une liaison vers un écran/clavier déportés ou une liaison vers un dispositif tel qu'un téléphone mobile intelligent permettant de notifier à l'utilisateur du téléphone mobile l'état de chaque fenêtre 20.

La **Fig. 4** représente un exemple d'architecture d'un dispositif de détection de la position d'un dispositif de mise d'une fenêtre dans au moins trois états différents selon la présente invention.

Le dispositif de détection de la position d'un dispositif de mise d'une fenêtre dans au moins trois états différents 200 parmi au moins trois états différents comprend :
- un processeur, micro-processeur, ou microcontrôleur 400 ;
- une mémoire volatile 403 ;
- une mémoire non volatile 402 ;
- un module 405 comprenant aux moins trois capteurs ILS1 à ILS3 ;
- un module radio 406 ;
- un bus de communication 401 reliant le processeur 400 à la mémoire ROM 403, à la mémoire RAM 403, le module 405 comprenant aux moins trois capteurs ILS1 à ILS3 et un module radio 406.

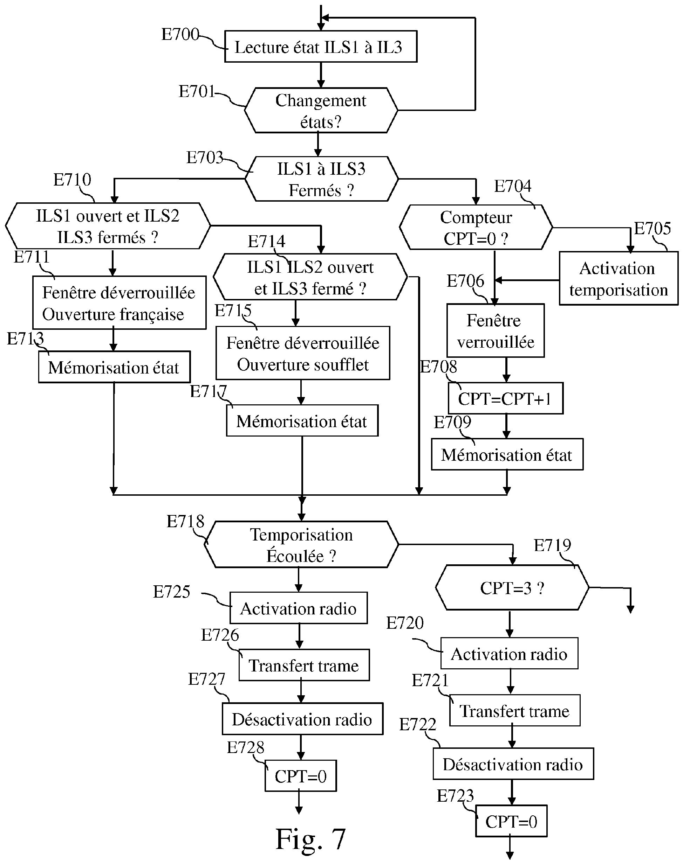

Le processeur 400 est capable d'exécuter des instructions chargées dans la mémoire volatile 403 à partir de la mémoire non volatile 402, d'un support de stockage, tel qu'une carte SD ou autre, ou d'un réseau de communication. Lorsque le dispositif de détection de la position d'un dispositif de mise d'une fenêtre dans au moins trois états différents 200 est mis sous tension, le processeur 400 est capable de lire de la mémoire volatile 403 des instructions et de les exécuter. Ces instructions forment un programme d'ordinateur qui cause la mise en œuvre, par le processeur 400, de tout ou partie du procédé décrit en relation avec la Fig. 7.

Tout ou partie du procédé décrit en relation avec la Fig. 7 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 5** représente un exemple d'architecture d'une centrale domotique du bâtiment qui est apte à interpréter des messages reçus du dispositif de détection de la position d'un dispositif de mise d'une fenêtre dans au moins trois états différents selon la présente invention.

La centrale domotique 40 comprend :
- un processeur, micro-processeur, ou microcontrôleur 500 ;
- une mémoire volatile 503 ;
- une mémoire non volatile 502 ;
- un module radio 505 ;
- une interface homme machine 506 ;
- un bus de communication 501 reliant le processeur 300 à la mémoire ROM 503, à la mémoire RAM 503, le module radio 505 et l'interface homme machine 506.

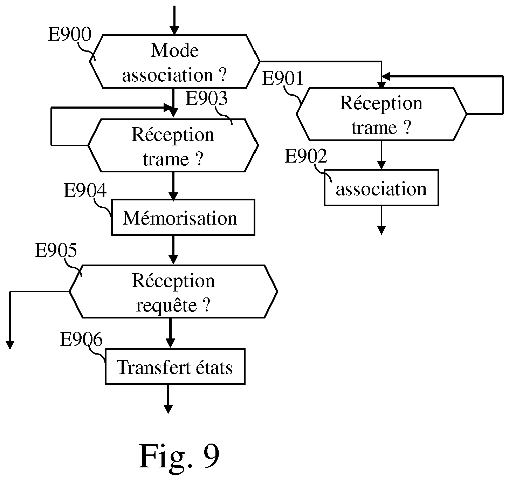

Le processeur 500 est capable d'exécuter des instructions chargées dans la mémoire volatile 503 à partir de la mémoire non volatile 502, d'un support de stockage, tel qu'une carte SD ou autre, ou d'un réseau de communication. Lorsque la centrale domotique 40 est mise sous tension, le processeur 500 est capable de lire de la mémoire volatile 503 des instructions et de les exécuter. Ces instructions forment un programme d'ordinateur qui cause la mise en œuvre, par le processeur 500, de tout ou partie du procédé décrit en relation avec la Fig. 9.

Tout ou partie du procédé décrit en relation avec la Fig. 9 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Le module radio 505 permet de recevoir des messages, entre autres, de chaque dispositif 200 de détection de la position d'un dispositif de mise d'une fenêtre dans au moins trois états différents.

L'interface homme machine 506 comporte des moyens de notification à au moins un habitant du bâtiment de l'état dans lequel chaque ouverture se trouve.

Les moyens de notification sont par exemple une liaison, par exemple de type Internet, vers un dispositif tel qu'un téléphone mobile intelligent permettant de notifier à l'utilisateur du téléphone mobile l'état de chaque fenêtre 20.

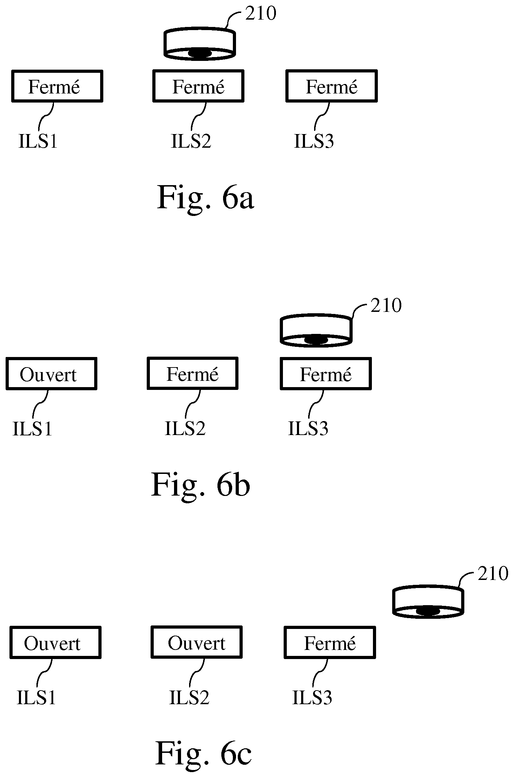

Les **Figs. 6** représentent les différentes positions prises par un élément mobile placé sur l'ouvrant de la fenêtre par rapport à des capteurs compris dans le dispositif de détection de la position d'un dispositif de mise d'une fenêtre dans au moins trois états différents selon la présente invention.

Dans l'exemple des Figs. 6, l'élément mobile est un aimant et les capteurs ILS1 à ILS3 sont des interrupteurs à lame souple qui autorisent ou non un contact électrique selon que l'aimant 210 est à proximité ou non des capteurs ILS1 à ILS3.

Dans la Fig. 6a, l'élément mobile 210 est placé en regard du capteur ILS2.

L'élément mobile 210 est un aimant dont l'aimantation rémanente et le champ coercitif sont grands et qui permet le déplacement des lames souples des capteurs ILS 1 à ILS3 dans un état permettant le passage d'un courant électrique dans les capteurs ILS 1 à ILS3.

Le passage d'un courant électrique dans les trois capteurs ILS1 à ILS3 est détecté par le processeur 400 comme représentatif de la position du dispositif de mise d'une fenêtre dans au moins trois états différents correspondant à l'état de verrouillage de la fenêtre.

Dans la Fig. 6b, l'élément mobile 210 est placé en regard du capteur ILS3.

L'aimantation rémanente et le champ coercitif de l'aimant 210 permet le déplacement des lames souples des capteurs ILS2 et ILS3 dans un état permettant le passage d'un courant électrique dans les capteurs ILS2 et ILS3 et non dans le capteur ILS1.

Le passage d'un courant électrique dans les capteurs ILS2 et ILS3 et non dans le capteur ILS1 est détecté par le processeur 400 comme représentatif de la position du dispositif de mise d'une fenêtre dans au moins trois états différents correspondant à l'état d'ouverture de la fenêtre à la française.

Dans la Fig. 6c, l'élément mobile 210 n'est placé en regard d'aucun des capteurs ILS1 à ILS3 mais est placé à proximité du capteur ILS3.

L'aimantation rémanente et le champ coercitif de l'aimant 210 permettent le déplacement de la lame souple du capteur ILS3 dans un état permettant le passage d'un courant électrique dans le capteur ILS3 et non dans les capteurs ILS1 et ILS2.

Le passage d'un courant électrique dans le capteur ILS3 et non dans les capteurs ILS1 et ILS2 est détecté par le processeur 400 comme représentatif de la position du dispositif de mise d'une fenêtre dans au moins trois états différents correspondant à l'état d'ouverture de la fenêtre en soufflet.

Il est à remarquer ici qu'un quatrième état peut aussi être détecté. Lorsque la fenêtre est ouverte, l'élément mobile 210 n'est placé en regard d'aucun des capteurs ILS1 à ILS3 et n'est pas placé à proximité du capteur ILS3.

L'aimantation rémanente et le champ coercitif de l'aimant 210 ne permettent pas le déplacement des lames souples des capteurs ILS1 à ILS3 dans un état permettant le passage d'un courant électrique dans les capteurs ILS1 à ILS3.

L'aimantation rémanente et le champ coercitif de l'aimant sont dimensionnés pour assurer la compatibilité avec les capteurs ILS1 et ILS3 ainsi que leur positionnement les uns par rapport aux autres.

La **Fig. 7** représente un algorithme, exécuté par le dispositif de détection de la position d'un dispositif de mise d'une fenêtre dans au moins trois états différents selon la présente invention.

Le présent algorithme est décrit dans un exemple dans lequel il est exécuté par le processeur 400 du dispositif de détection de la position d'un dispositif de mise d'une fenêtre dans au moins trois états différents.

A l'étape E700, le processeur 400 lit l'état des capteurs ILS1 à IL3. Plus précisément, le processeur 400 vérifie si les lames souples des capteurs ILS1 à ILS3 sont dans un état permettant le passage d'un courant électrique dans les capteurs ILS 1 à ILS3.

A l'étape suivante E701, le processeur 400 vérifie si l'état des capteurs ILS1 à IL3 est modifié par rapport à l'état mémorisé à la précédente exécution du présent algorithme.

Si l'état des capteurs ILS1 à IL3 est modifié par rapport à l'état mémorisé à la précédente exécution du présent algorithme, le processeur 400 passe à l'étape E703. Dans la négative, le processeur 400 retourne à l'étape E700.

A l'étape suivante E703, le processeur 400 vérifie si les lames souples des capteurs ILS1 à ILS3 sont dans un état permettant le passage d'un courant électrique dans les capteurs ILS1 à ILS3.

Dans l'affirmative, le processeur 400 passe à l'étape E704. Dans la négative, le processeur 400 passe à l'étape E710.

A l'étape E704, le processeur 400 vérifie si un compteur CPT est à la valeur nulle.

Si le compteur CPT est à la valeur nulle, le processeur 400 passe à l'étape E705. Dans la négative, le processeur 400 passe à l'étape E706.

A l'étape E705, le processeur 400 active une temporisation tempo. La temporisation tempo est par exemple comprise entre 5 et 20 secondes. Par exemple, la temporisation tempo est égale à 10 secondes.

Cette opération effectuée, le processeur 400 passe à l'étape E706.

A l'étape E706, le processeur 400 détermine, à partir de la détection du passage d'un courant électrique dans les trois capteurs ILS 1 à ILS3 que la position du dispositif de mise d'une fenêtre dans au moins trois états différents correspond à l'état verrouillé.

A l'étape suivante E708, le processeur 400 incrémente le compteur CPT d'une unité.

A l'étape suivante E709, le processeur 400 mémorise l'état des capteurs ILS1 et ILS3.

Cette opération effectuée, le processeur 400 passe à l'étape E718.

A l'étape E710, le processeur 400 vérifie si la lame souple du capteur ILS1 est dans un état ne permettant pas le passage d'un courant électrique dans le capteur ILS1 et si les lames souples des capteurs ILS2 et ILS3 sont dans un état permettant le passage d'un courant électrique dans les capteurs ILS2 et ILS3.

Dans l'affirmative, le processeur 400 passe à l'étape E711. Dans la négative, le processeur 400 passe à l'étape E714.

A l'étape E711, le processeur 400 détermine, à partir de la détection du passage d'un courant électrique dans les deux capteurs ILS2 et ILS3, et non dans le capteur ILS1, que la position du dispositif de mise d'une fenêtre dans au moins trois états différents correspond à l'état ouverture à la française.

A l'étape suivante E713, le processeur 400 mémorise l'état des capteurs ILS1 et ILS3.

Cette opération effectuée, le processeur 400 passe à l'étape E718.

A l'étape E714, le processeur 400 vérifie si les lames souples des capteurs ILS1 et ILS2 sont dans un état ne permettant pas le passage d'un courant électrique dans les capteurs ILS 1 et ILS2 et si la lame souple du capteur et ILS3 est dans un état permettant le passage d'un courant électrique dans le capteur ILS3.

Dans l'affirmative, le processeur 400 passe à l'étape E715. Dans la négative, le processeur 400 passe à l'étape E718.

A l'étape E715, le processeur 400 détermine, à partir de la détection du passage d'un courant électrique dans le capteur ILS3 et non dans les capteurs ILS1 et ILS2, que la position du dispositif de mise d'une fenêtre dans au moins trois états différents correspond à l'ouverture en soufflet.

A l'étape suivante E717, le processeur 400 mémorise l'état des capteurs ILS1 et ILS3.

Cette opération effectuée, le processeur 400 passe à l'étape E718.

A l'étape E718, le processeur 400 vérifie si la temporisation tempo est écoulée. Dans l'affirmative, le processeur 400 passe à l'étape E725. Dans la négative, le processeur 400 passe à l'étape E719.

A l'étape E725, le processeur 400 commande l'activation du module radio 406. L'activation consiste à mettre le module radio 406 sous tension.

A l'étape E726, le processeur 400 commande le transfert d'une trame par l'intermédiaire du module radio 406 à destination de la centrale d'alarme 30 ou de la passerelle domotique 40.

La trame transférée comporte, entre autres, l'identifiant du dispositif de détection de la position d'un dispositif de mise d'une fenêtre dans au moins trois états différents et la position déterminée.

A l'étape E727, le processeur 400 commande la désactivation du module radio 406. La désactivation consiste à mettre le module radio 406 hors tension.

A l'étape E728, le processeur 400 réinitialise la valeur du compteur CPT à la valeur nulle.

Cette opération effectuée, le processeur 400 retourne à l'étape E700 pour une nouvelle itération du présent algorithme.

A l'étape E719, le processeur 400 vérifie si la valeur du compteur CPT est égale à une valeur prédéterminée. Par exemple, la valeur prédéterminée est comprise entre trois et cinq. Par exemple, la valeur prédéterminée est égale à trois.

Dans l'affirmative, le processeur 400 passe à l'étape E720. Dans la négative, le processeur 400 retourne à l'étape E700 pour une nouvelle itération du présent algorithme.

A l'étape E720, le processeur 400 commande l'activation du module radio 406. L'activation consiste à mettre le module radio 406 sous tension.

A l'étape E721, le processeur 400 commande le transfert d'une trame par l'intermédiaire du module radio 406 à destination de la centrale d'alarme 30 ou de la passerelle domotique 40.

La trame transférée comporte, entre autres, l'identifiant du dispositif de détection de la position d'un dispositif de mise d'une fenêtre dans au moins trois états différents et une information représentative d'une requête association.

A l'étape E722, le processeur 400 commande la désactivation du module radio 406. La désactivation consiste à mettre le module radio 406 hors tension.

A l'étape E723, le processeur 400 réinitialise la valeur du compteur CPT à la valeur nulle.

Cette opération effectuée, le processeur 400 retourne à l'étape E700 pour une nouvelle itération du présent algorithme.

La **Fig. 8** représente un algorithme, exécuté par la centrale d'alarme du bâtiment, pour le traitement des messages reçus du dispositif de détection de la position d'un dispositif de mise d'une fenêtre dans au moins trois états différents selon la présente invention.

Le présent algorithme est décrit dans un exemple dans lequel il est exécuté par le processeur 300 de la centrale d'alarme 30.

A l'étape E800, le processeur 300 vérifie si la centrale d'alarme est configurée dans un mode association.

Le mode association est configuré par le résidant du bâtiment par l'intermédiaire de l'interface homme machine 306.

Si la centrale d'alarme est configurée dans un mode association, le processeur 300 passe à l'étape E801. Dans la négative, le processeur 300 passe à l'étape E803.

A l'étape E801, le processeur 300 vérifie si une trame est reçue par l'intermédiaire du module radio 305 par la centrale d'alarme 30.

La trame reçue comporte, entre autres, l'identifiant du dispositif de détection de la position d'un dispositif de mise d'une fenêtre dans au moins trois états différents et une information représentative d'une requête d'association avec la centrale d'alarme 30.

Si une trame est reçue par l'intermédiaire du module radio 305 par la centrale d'alarme 30, le processeur 300 passe à l'étape E802. Dans la négative, le processeur 300 retourne à l'étape E801.

A l'étape E802, l'association du dispositif de détection de la position d'un dispositif de mise d'une fenêtre dans au moins trois états différents est effectuée.

L'association permet à la centrale d'alarme 30 d'inclure le dispositif de détection de la position d'un dispositif de mise d'une fenêtre dans au moins trois états différents dans une liste de capteurs que gère la centrale d'alarme.

La centrale d'alarme 30, après l'association, est apte à traiter les différentes trames reçues du dispositif de détection de la position d'un dispositif de mise d'une fenêtre dans au moins trois états différents et comprenant une position d'un dispositif de mise de la fenêtre dans au moins trois états différents.

L'association permet aussi à un résident du bâtiment de nommer le dispositif de détection de la position d'un dispositif de mise d'une fenêtre dans au moins trois états différents. Parc exemple, le résident du bâtiment peut nommer les dispositifs de détection de la position d'un dispositif de mise d'une fenêtre dans au moins trois états différents en fonction de leur emplacement dans le bâtiment : fenêtre cuisine, fenêtre salle de bain étage. Cette opération effectuée, le processeur 300 retourne à l'étape E800.

A l'étape E803, le processeur 300 vérifie si une trame est reçue par l'intermédiaire du module radio 305 par la centrale d'alarme 30.

La trame transférée comporte, entre autres l'identifiant du dispositif de détection de la position d'un dispositif de mise d'une fenêtre dans au moins trois états différents et la position déterminée.

Si la trame est reçue par l'intermédiaire du module radio 305 par la centrale d'alarme 30, le processeur 300 passe à l'étape E804. Dans la négative, le processeur 300 retourne à l'étape E803.

A l'étape E804, le processeur 300 mémorise l'identifiant du dispositif de détection de la position d'un dispositif de mise d'une fenêtre dans au moins trois états différents et la position comprise dans la trame reçue à l'étape E803.

A l'étape suivante E805, le processeur 300 vérifie si la centrale d'alarme est configurée dans un mode d'activation.

L'activation correspond à un mode de mise en surveillance du bâtiment, de détection d'intrusion et de notification d'une éventuelle intrusion.

Si la centrale d'alarme est configurée dans un mode d'activation, le processeur 300 passe à l'étape E806.

Dans la négative, le processeur 300 retourne à l'étape E800.

A l'étape E806, le processeur 300 vérifie si au moins un dispositif de mise d'une fenêtre dans au moins trois états différents est dans une position correspondant à une ouverte à la française.

Si au moins un dispositif de mise d'une fenêtre dans au moins trois états différents est dans une position correspondant à une ouverte à la française, le processeur passe à l'étape E708. Dans la négative, le processeur 300 passe à l'étape E807.

A l'étape E807, le processeur 300 active l'alarme.

A l'étape E808, le processeur commande le transfert d'un message par l'interface homme machine 306 pour indiquer la ou les fenêtres dont le dispositif de mise d'une fenêtre dans au moins trois états différents est dans une position correspondant à une ouverture à la française.

Le résident du bâtiment, peut ainsi, selon son choix, maintenir l'activation de l'alarme ou fermer la fenêtre ou chaque fenêtre ouverte à la française avant de maintenir l'activation de l'alarme.

La **Fig. 9** représente un algorithme, exécuté par la passerelle domotique du bâtiment, pour le traitement des messages reçus du dispositif de détection de la position d'un dispositif de mise d'une fenêtre dans au moins trois états différents selon la présente invention.

Le présent algorithme est décrit dans un exemple dans lequel il est exécuté par le processeur 500 de la passerelle domotique 40.

A l'étape E900, le processeur 500 vérifie si la passerelle domotique 40 est configurée dans un mode association.

Le mode association est configuré par le résident du bâtiment par l'intermédiaire de l'interface homme machine 506.

Si la passerelle domotique 40 est configurée dans un mode association, le processeur 500 passe à l'étape E901. Dans la négative, le processeur 500 passe à l'étape E903.

A l'étape E901, le processeur 500 vérifie si une trame est reçue par l'intermédiaire du module radio 505 par la passerelle domotique 40.

La trame reçue comporte, entre autres, l'identifiant du dispositif de détection de la position d'un dispositif de mise d'une fenêtre dans au moins trois états différents et une information représentative d'une requête d'association avec la centrale d'alarme 30.

Si une trame est reçue par l'intermédiaire du module radio 505 par la passerelle domotique 40, le processeur 500 passe à l'étape E902. Dans la négative, le processeur 300 retourne à l'étape E901.

A l'étape E902, l'association du dispositif de détection de la position d'un dispositif de mise d'une fenêtre dans au moins trois états différents est effectuée.

L'association permet à la passerelle domotique 40 d'inclure le dispositif de détection de la position d'un dispositif de mise d'une fenêtre dans au moins trois états différents dans une liste de capteurs que gère la passerelle domotique 40.

La passerelle domotique 40, après l'association, est apte à traiter les différentes trames reçues du dispositif de détection de la position d'un dispositif de mise d'une fenêtre dans au moins trois états différents et comprenant une position d'un dispositif de mise de la fenêtre dans au moins trois états différents.

L'association permet aussi à un résident du bâtiment de nommer le dispositif de détection de la position d'un dispositif de mise d'une fenêtre dans au moins trois états différents. Parc exemple, le résident du bâtiment peut nommer les dispositifs de détection de la position d'un dispositif de mise d'une fenêtre dans au moins trois états différents en fonction de leur emplacement dans le bâtiment : fenêtre cuisine, fenêtre salle de bain étage.

Cette opération effectuée, le processeur 500 retourne à l'étape E900.

A l'étape E903, le processeur 500 vérifie si une trame est reçue par l'intermédiaire du module radio 505 par la passerelle domotique 40.

La trame transférée comporte, entre autres l'identifiant du dispositif de détection de la position d'un dispositif de mise d'une fenêtre dans au moins trois états différents et la position déterminée.

Si la trame est reçue par l'intermédiaire du module radio 505 par la passerelle domotique 40, le processeur 500 passe à l'étape E904. Dans la négative, le processeur 500 retourne à l'étape E903.

A l'étape E904, le processeur 500 mémorise l'identifiant du dispositif de détection de la position d'un dispositif de mise d'une fenêtre dans au moins trois états différents et la position comprise dans la trame reçue à l'étape E903.

A l'étape suivante E905, le processeur 500 vérifie si la passerelle domotique 40 reçoit une requête d'un téléphone mobile intelligent d'un résident du bâtiment 10.

Si la passerelle domotique 40 reçoit une requête d'un téléphone mobile intelligent d'un résident du bâtiment 10, le processeur 500 passe à l'étape E906. Dans la négative, le processeur 500 retourne à l'étape E900.

A l'étape E96, le processeur 500 commande le transfert d'une information identifiant chaque dispositif de détection de la position d'un dispositif de mise d'une fenêtre dans au moins trois états différents ainsi que la position de chaque dispositif de mise de la fenêtre dans au moins trois états différents mémorisée.

Bien entendu, la présente invention n'est nullement limitée aux modes de réalisation décrits ici, mais englobe, bien au contraire, toute variante à la portée de l'homme du métier.

## Revendications

1. Procédé d'association d'un dispositif de détection d'une position d'un dispositif de mise d'une fenêtre dans au moins deux états différents à un dispositif distant par l'intermédiaire d'une liaison radio, **caractérisé en ce que** le procédé comporte les étapes de :
- mise du dispositif distant dans un mode d'association,
- détection (E703), par le dispositif de détection d'une position d'un dispositif de mise d'une fenêtre dans au moins deux états différents, d'une première position du dispositif de mise d'une fenêtre dans au moins deux états différents correspondant au verrouillage de la fenêtre,
- activation (E705), par le dispositif de détection d'une position d'un dispositif de mise d'une fenêtre dans au moins deux états différents, d'une temporisation d'une durée prédéterminée,
- détection (E710, E714), par le dispositif de détection d'une position d'un dispositif de mise d'une fenêtre dans au moins deux états différents, d'une position différente de la position correspondant au verrouillage de la fenêtre,
- transfert (E721) d'une trame comportant l'identifiant du dispositif de détection de la position d'un dispositif de mise d'une fenêtre dans au moins deux états différents et une information représentative d'une requête d'association avec le dispositif distant si la détection de la position correspondant au verrouillage de la fenêtre et si la détection de la position différente de la position correspondant au verrouillage de la fenêtre sont effectuées au moins trois fois consécutives (E719) pendant la durée prédéterminée,
- réception (E801), par le dispositif distant, de la trame,
- association (E802) du dispositif de détection de la position d'un dispositif de mise d'une fenêtre dans au moins deux états avec le dispositif distant.

2. Procédé selon la revendication 1, **caractérisé en ce que** la fenêtre est une fenêtre oscillo-battante, le dispositif de détection d'une position d'un dispositif de mise d'une fenêtre dans au moins deux états différents détecte trois positions du dispositif de mise d'une fenêtre dans au moins trois états différents, un premier état correspondant au verrouillage de la fenêtre, un second état correspondant à une ouverture à la française, un troisième état correspondant à une ouverture en soufflet.

3. Procédé selon la revendication 2, **caractérisé en ce que** le dispositif distant est une centrale d'alarme et **en ce que** le procédé comporte en outre les étapes de :
- réception (E803), par la centrale d'alarme, d'une trame par l'intermédiaire d'un module radio de la centrale d'alarme, la trame étant transférée par le dispositif de détection de la position d'un dispositif de mise d'une fenêtre dans au moins trois états différents et comprenant un identifiant du dispositif de détection de la position d'un dispositif de mise d'une fenêtre dans au moins trois états différents ainsi que la position du dispositif de mise de la fenêtre dans au moins trois états différents,
- mémorisation (E804), par la centrale d'alarme, de l'identifiant du dispositif de détection de l'état de la fenêtre et de la position du dispositif de mise de la fenêtre dans au moins trois états différents,
- détection (E805), par la centrale d'alarme, d'une requête de mise de la centrale d'alarme dans un mode de surveillance d'un bâtiment comprenant la fenêtre,
- lecture de la position mémorisée,
- activation, par la centrale d'alarme, du mode de surveillance du bâtiment si la position mémorisée correspond au premier ou au troisième état,
- transfert (E808), par la centrale d'alarme, à au moins un résident du bâtiment d'un message identifiant le dispositif de détection de la position d'un dispositif de mise d'une fenêtre dans au moins trois états différents si la position mémorisée correspond au second état.

4. Procédé selon la revendication 2, **caractérisé en ce que** le dispositif distant est une passerelle domotique et **en ce que** le procédé comporte en outre les étapes de :
- réception ((E903), par la passerelle domotique, d'une trame par l'intermédiaire d'un module radio de la centrale d'alarme, la trame étant transférée par le dispositif de détection de la position d'un dispositif de mise d'une fenêtre dans au moins trois états différents et comprenant un identifiant du dispositif de détection de la position d'un dispositif de mise d'une fenêtre dans au moins trois états différents ainsi que la position du dispositif de mise de la fenêtre dans au moins trois états différents,
- mémorisation (E904), par la centrale domotique, de l'identifiant du dispositif de détection de l'état de la fenêtre et de la position du dispositif de mise de la fenêtre dans au moins trois états différents,
- réception (E905) d'une requête d'obtention de la position d'un dispositif de mise d'une fenêtre dans au moins trois états différents,
- transfert (E906) d'une information identifiant le dispositif de détection de la position d'un dispositif de mise d'une fenêtre dans au moins trois états différents ainsi que de la position du dispositif de mise de la fenêtre dans au moins trois états différents mémorisée.

5. Procédé selon la revendication 4, **caractérisé en ce que** la requête d'obtention de la position d'un dispositif de mise d'une fenêtre dans au moins trois états différents est reçue d'un téléphone mobile intelligent et **en ce que** l'information identifiant le dispositif de détection de la position d'un dispositif de mise d'une fenêtre dans au moins trois états différents ainsi que la position du dispositif de mise de la fenêtre dans au moins trois états différents mémorisée sont transférées au téléphone mobile intelligent.

6. Procédé selon l'une quelconque des revendications 3 à 5, **caractérisé en ce que**, préalablement au transfert de chaque trame, le procédé comporte les étapes de :
- détection, par le dispositif de détection de la position du dispositif de mise d'une fenêtre dans au moins trois états différents, d'une modification de la position de l'élément mobile,
- activation (E720), par le dispositif de détection de la position d'un dispositif de mise d'une fenêtre dans au moins trois états différents, du module radio du dispositif de détection de la position d'un dispositif de mise d'une fenêtre dans au moins trois états différents avant le transfert de la trame si une modification de la position de l'élément mobile est détectée,
- désactivation (E722), par le dispositif de détection de l'état de la fenêtre, du module radio du dispositif de détection de la position d'un dispositif de mise d'une fenêtre dans au moins trois états différents après le transfert de la trame.

7. Procédé selon l'une quelconque des revendications 2 à 6, **caractérisé en ce que** le dispositif de détection de la position du dispositif de mise de la fenêtre dans au moins trois états différents comporte trois capteurs.

8. Procédé selon la revendication 7, **caractérisé en ce que** l'élément mobile est un aimant et les capteurs sont des interrupteurs à lame souple, chaque interrupteur à lame souple autorisant ou non un contact électrique selon que l'aimant est à proximité ou non de l'interrupteur à lame souple.

9. Procédé selon la revendication 8, **caractérisé en ce que** les moyens de détection, par le dispositif de détection de la position du dispositif de mise de la fenêtre dans au moins trois états différents, d'une modification de la position de l'élément mobile, comporte des moyens de mémorisation d'une position de l'élément mobile obtenue antérieurement à la position obtenue et de comparaison de la position obtenue à la position de l'élément mobile obtenue antérieurement à la position obtenue.

10. Procédé selon la revendication 9, **caractérisé en ce que** les positions prises par l'aimant en fonction de la position du dispositif de mise de la fenêtre dans les au moins trois états différents sont parallèles à un plan sur lequel les interrupteurs à lame souple sont disposés, une première position provoquant un contact électrique pour chaque interrupteur à lame souple, une seconde position provoquant un contact électrique pour uniquement deux interrupteurs à lame souple, une troisième position provoquant un contact électrique pour uniquement un seul interrupteur à lame souple.

11. Système d'association d'un dispositif de détection d'une position d'un dispositif de mise d'une fenêtre dans au moins deux états différents à un dispositif distant par l'intermédiaire d'une liaison radio, **caractérisé en ce que** le système comporte:
- des moyens, compris dans le dispositif distant, de mise du dispositif distant dans un mode d'association,
- des moyens, compris dans le dispositif de détection d'une position d'un dispositif de mise d'une fenêtre dans au moins deux états différents, de détection, d'une première position du dispositif de mise d'une fenêtre dans au moins deux états différents correspondant au verrouillage de la fenêtre,
- des moyens, compris dans le dispositif de détection d'une position d'un dispositif de mise d'une fenêtre dans au moins deux états différents, d'activation d'une temporisation d'une durée prédéterminée,
- des moyens, compris dans le dispositif de détection d'une position d'un dispositif de mise d'une fenêtre dans au moins deux états différents, de détection d'une position différente de la position correspondant au verrouillage de la fenêtre,
- des moyens, compris dans le dispositif de détection d'une position d'un dispositif de mise d'une fenêtre dans au moins deux états différents, de transfert d'une trame comportant l'identifiant du dispositif de détection de la position d'un dispositif de mise d'une fenêtre dans au moins deux états différents et une information représentative d'une requête d'association avec le dispositif distant si la détection de la position correspondant au verrouillage de la fenêtre et si la détection de la position différente de la position correspondant au verrouillage de la fenêtre sont effectuées au moins trois fois consécutives pendant la durée prédéterminée,
- des moyens, compris dans le dispositif distant, de réception de la trame,
- des moyens, compris dans le dispositif distant, d'association du dispositif de détection de la position d'un dispositif de mise d'une fenêtre dans au moins deux états avec le dispositif distant.

## Patentansprüche

1. Verfahren zur Zuordnung einer Erfassungsvorrichtung einer Stellung einer Vorrichtung zum Versetzen eines Fensters in mindestens zwei verschiedene Zustände zu einer fernen Vorrichtung mittels einer Funkverbindung, **dadurch gekennzeichnet, dass** das Verfahren die folgenden Schritte aufweist:
- Versetzen der fernen Vorrichtung in einen Zuordnungsmodus,
- Erfassen (E703) einer ersten Stellung der Vorrichtung zum Versetzen eines Fensters in mindestens zwei verschiedene Zustände entsprechend der Verriegelung des Fensters durch die Erfassungsvorrichtung einer Stellung einer Vorrichtung zum Versetzen eines Fensters in mindestens zwei verschiedene Zustände,
- Aktivieren (E705) einer Verzögerung vorbestimmter Dauer durch die Erfassungsvorrichtung einer Stellung einer Vorrichtung zum Versetzen eines Fensters in mindestens zwei verschiedene Zustände,
- Erfassen (E710, E714) einer anderen Stellung als die der Verriegelung des Fensters entsprechende Stellung durch die Erfassungsvorrichtung einer Stellung einer Vorrichtung zum Versetzen eines Fensters in mindestens zwei verschiedene Zustände,
- Übertragen (E721) eines die Kennung der Erfassungsvorrichtung der Stellung einer Vorrichtung zum Versetzen eines Fensters in mindestens zwei verschiedene Zustände und eine für eine Zuordnungsanforderung mit der fernen Vorrichtung repräsentative Information aufweisenden Rahmens, wenn die Erfassung der der Verriegelung des Fensters entsprechenden Stellung und die Erfassung der Stellung anders als die der Verriegelung des Fensters entsprechende Stellung während der vorbestimmten Dauer mindestens dreimal hintereinander (E719) ausgeführt werden,
- Empfangen (E801) des Rahmens durch die ferne Vorrichtung,
- Zuordnen (E802) der Erfassungsvorrichtung der Stellung einer Vorrichtung zum Versetzen eines Fensters in mindestens zwei Zustände zur fernen Vorrichtung.

2. Verfahren nach Anspruch 1, **dadurch gekennzeichnet, dass**, wenn das Fenster ein Drehkippfenster ist, die Erfassungsvorrichtung einer Stellung einer Vorrichtung zum Versetzen eines Fensters in mindestens zwei verschiedene Zustände drei Stellungen der Vorrichtung zum Versetzen eines Fensters in mindestens drei verschiedene Zustände erfasst, wobei ein erster Zustand der Verriegelung des Fensters entspricht, ein zweiter Zustand einer Drehöffnung entspricht, ein dritter Zustand einer Kippöffnung entspricht.

3. Verfahren nach Anspruch 2, **dadurch gekennzeichnet, dass** die ferne Vorrichtung eine Alarmzentrale ist, und dass das Verfahren außerdem die folgenden Schritte aufweist:
- Empfangen (E803) eines Rahmens durch die Alarmzentrale mittels eines Funkmoduls der Alarmzentrale, wobei der Rahmen durch die Erfassungsvorrichtung der Stellung einer Vorrichtung zum Versetzen eines Fensters in mindestens drei verschiedene Zustände übertragen wird und eine Kennung der Erfassungsvorrichtung der Stellung einer Vorrichtung zum Versetzen eines Fensters in mindestens drei verschiedene Zustände sowie die Stellung der Vorrichtung zum Versetzen des Fensters in mindestens drei verschiedene Zustände enthält,
- Speichern (E804) der Kennung der Erfassungsvorrichtung des Zustands des Fensters und der Stellung der Vorrichtung zum Versetzen des Fensters in mindestens drei verschiedene Zustände durch die Alarmzentrale,
- Erfassen (E805) einer Anforderung zum Versetzen der Alarmzentrale in einen Überwachungsmodus eines das Fenster enthaltenden Gebäudes durch die Alarmzentrale,
- Lesen der gespeicherten Stellung,
- Aktivieren des Überwachungsmodus des Gebäudes durch die Alarmzentrale, wenn die gespeicherte Stellung dem ersten oder dem dritten Zustand entspricht,
- Übertragen (E808) einer die Erfassungsvorrichtung der Stellung einer Vorrichtung zum Versetzen eines Fensters in mindestens drei verschiedene Zustände bezeichnenden Nachricht durch die Alarmzentrale an mindestens einen Bewohner des Gebäudes einer Nachricht, wenn die gespeicherte Stellung dem zweiten Zustand entspricht.

4. Verfahren nach Anspruch 2, **dadurch gekennzeichnet, dass** die ferne Vorrichtung ein Heim-Gateway ist, und dass das Verfahren außerdem die folgenden Schritte aufweist:
- Empfangen ((E903) eines Rahmens mittels eines Funkmoduls der Alarmzentrale durch das Heim-Gateway, wobei der Rahmen von der Erfassungsvorrichtung der Stellung einer Vorrichtung zum Versetzen eines Fensters in mindestens drei verschiedene Zustände übertragen wird und eine Kennung der Erfassungsvorrichtung der Stellung einer Vorrichtung zum Versetzen eines Fensters in mindestens drei verschiedene Zustände sowie die Stellung der Vorrichtung zum Versetzen des Fensters in mindestens drei verschiedene Zustände enthält,
- Speichern (E904) der Kennung der Erfassungsvorrichtung des Zustands des Fensters und der Stellung der Vorrichtung zum Versetzen des Fensters in mindestens drei verschiedene Zustände durch die Hauszentrale,
- Empfangen (E905) einer Anforderung zum Erhalt der Stellung einer Vorrichtung zum Versetzen eines Fensters in mindestens drei verschiedene Zustände,
- Übertragen (E906) einer Information, die die Erfassungsvorrichtung der Stellung einer Vorrichtung zum Versetzen eines Fensters in mindestens drei verschiedene Zustände sowie der gespeicherten Stellung der Vorrichtung zum Versetzen des Fensters in mindestens drei verschiedene Zustände bezeichnet.

5. Verfahren nach Anspruch 4, **dadurch gekennzeichnet, dass** die Anforderung zum Erhalt der Stellung einer Vorrichtung zum Versetzen eines Fensters in mindestens drei verschiedene Zustände von einem Smartphone empfangen wird, und dass die die Erfassungsvorrichtung der Stellung einer Vorrichtung zum Versetzen eines Fensters in mindestens drei verschiedene Zustände bezeichnende Information sowie die gespeicherte Stellung der Vorrichtung zum Versetzen des Fensters in mindestens drei verschiedene Zustände an das Smartphone übertragen werden.

6. Verfahren nach einem der Ansprüche 3 bis 5, **dadurch gekennzeichnet, dass** das Verfahren vor der Übertragung jedes Rahmens die folgenden Schritte aufweist:
- Erfassen einer Änderung der Stellung des beweglichen Elements durch die Erfassungsvorrichtung der Stellung der Vorrichtung zum Versetzen eines Fensters in mindestens drei verschiedene Zustände,
- Aktivieren (E720) des Funkmoduls der Erfassungsvorrichtung der Stellung einer Vorrichtung zum Versetzen eines Fensters in mindestens drei verschiedene Zustände durch die Erfassungsvorrichtung der Stellung einer Vorrichtung zum Versetzen eines Fensters in mindestens drei verschiedene Zustände vor der Übertragung des Rahmens, wenn eine Änderung der Stellung des beweglichen Elements erfasst wird,
- Deaktivieren (E722) des Funkmoduls der Erfassungsvorrichtung der Stellung einer Vorrichtung zum Versetzen eines Fensters in mindestens drei verschiedene Zustände durch die Erfassungsvorrichtung des Zustands des Fensters nach der Übertragung des Rahmens.

7. Verfahren nach einem der Ansprüche 2 bis 6, **dadurch gekennzeichnet, dass** die Erfassungsvorrichtung der Stellung der Vorrichtung zum Versetzen des Fensters in mindestens drei verschiedene Zustände drei Sensoren aufweist.

8. Verfahren nach Anspruch 7, **dadurch gekennzeichnet, dass** das bewegliche Element ein Magnet ist, und die Sensoren Reed-Schalter sind, wobei jeder Reed-Schalter einen elektrischen Kontakt erlaubt oder nicht, je nachdem, ob der Magnet in der Nähe des Reed-Schalters ist oder nicht.

9. Verfahren nach Anspruch 8, **dadurch gekennzeichnet, dass** die Einrichtungen zur Erfassung einer Veränderung der Stellung des beweglichen Elements durch die Erfassungsvorrichtung der Stellung der Vorrichtung zum Versetzen des Fensters in mindestens drei verschiedene Zustände Einrichtungen zum Speichern einer Stellung des beweglichen Elements, die vor der erhaltenen Stellung erhalten wurde, und zum Vergleich der erhaltenen Stellung mit der Stellung des beweglichen Elements aufweisen, die vor der erhaltenen Stellung erhalten wurde.

10. Verfahren nach Anspruch 9, **dadurch gekennzeichnet, dass** die vom Magnet abhängig von der Stellung der Vorrichtung zum Versetzen des Fensters in die mindestens drei verschiedenen Zustände eingenommenen Stellungen parallel zu einer Ebene sind, auf der die Reed-Schalter angeordnet sind, wobei eine erste Stellung einen elektrischen Kontakt für jeden Reed-Schalter bewirkt, eine zweite Stellung einen elektrischen Kontakt für nur zwei Reed-Schalter bewirkt, eine dritte Stellung einen elektrischen Kontakt für nur einen Reed-Schalter bewirkt.

11. System zur Zuordnung einer Vorrichtung zur Erfassung einer Stellung einer Vorrichtung zum Versetzen eines Fensters in mindestens zwei verschiedene Zustände zu einer fernen Vorrichtung mittels einer Funkverbindung, **dadurch gekennzeichnet, dass** das System aufweist:
- in der fernen Vorrichtung enthaltene Einrichtungen zum Versetzen der fernen Vorrichtung in einen Zuordnungsmodus,
- in der Erfassungsvorrichtung einer Stellung einer Vorrichtung zum Versetzen eines Fensters in mindestens zwei verschiedene Zustände enthaltene Einrichtungen zur Erfassung einer ersten Stellung der Vorrichtung zum Versetzen eines Fensters in mindestens zwei verschiedene Zustände, die der Verriegelung des Fensters entspricht,
- in der Erfassungsvorrichtung einer Stellung einer Vorrichtung zum Versetzen eines Fensters in mindestens zwei verschiedene Zustände enthaltene Einrichtungen zur Aktivierung einer Verzögerung einer vorbestimmten Dauer,
- in der Erfassungsvorrichtung einer Stellung einer Vorrichtung zum Versetzen eines Fensters in mindestens zwei verschiedene Zustände enthaltene Einrichtungen zur Erfassung einer anderen Stellung als die Stellung entsprechend der Verriegelung des Fensters,
- in der Erfassungsvorrichtung einer Stellung einer Vorrichtung zum Versetzen eines Fensters in mindestens zwei verschiedene Zustände enthaltene Einrichtungen zur Übertragung eines die Kennung der Erfassungsvorrichtung der Stellung einer Vorrichtung zum Versetzen eines Fensters in mindestens zwei verschiedene Zustände und eine für eine Zuordnungsanforderung zur fernen Vorrichtung repräsentative Information aufweisenden Rahmens, wenn die Erfassung der Stellung entsprechend der Verriegelung des Fensters und die Erfassung der Stellung anders als die Stellung entsprechend der Verriegelung des Fensters mindestens dreimal hintereinander während der vorbestimmten Dauer ausgeführt werden,
- in der fernen Vorrichtung enthaltene Einrichtungen zum Empfang des Rahmens,
- in der fernen Vorrichtung enthaltene Einrichtungen zur Zuordnung der Erfassungsvorrichtung der Stellung einer Vorrichtung zum Versetzen eines Fensters in mindestens zwei Zustände zur fernen Vorrichtung.

## Claims

1. Method for associating a device for detecting a position of a device for placing a window in at least two different states with a remote device via a radio link, **characterized in that** the method includes the steps of:
- placing the remote device in an association mode,
- the device for detecting a position of a device for placing a window in at least two different states detecting (E703) a first position of the device for placing a window in at least two different states, which position corresponds to the window being locked,
- the device for detecting a position of a device for placing a window in at least two different states activating (E705) a timeout of a predetermined duration,
- the device for detecting a position of a device for placing a window in at least two different states detecting (E710, E714) a position different from the position that corresponds to the window being locked,
- transferring (E721) a frame, which includes the identifier of the device for detecting the position of a device for placing a window in at least two different states and an item of information representative of a request for association with the remote device, if the detection of the position that corresponds to the window being locked and the detection of the position different from the position that corresponds to the window being locked are performed at least three consecutive times (E719) during the predetermined duration,
- the remote device receiving (E801) the frame,
- associating (E802) the device for detecting the position of a device for placing a window in at least two states with the remote device.

2. Method according to Claim 1, **characterized in that** the window is a tilt and turn window, and the device for detecting a position of a device for placing a window in at least two different states detects three positions of the device for placing a window in at least three different states, a first state corresponding to the window being locked, a second state corresponding to inswing casement-style opening, and a third state corresponding to hopper-style opening.

3. Method according to Claim 2, **characterized in that** the remote device is an alarm system, and **in that** the method further includes the steps of:
- the alarm system receiving (E803) a frame via a radio module of the alarm system, the frame being transferred by the device for detecting the position of a device for placing a window in at least three different states and comprising an identifier of the device for detecting the position of a device for placing a window in at least three different states and also the position of the device for placing the window in at least three different states,
- the alarm system storing (E804) the identifier of the device for detecting the state of the window and the position of the device for placing the window in at least three different states,
- the alarm system detecting (E805) a request to place the alarm system in a monitoring mode for monitoring a building comprising the window,
- reading the stored position,
- the alarm system activating the building monitoring mode if the stored position corresponds to the first or the third state,
- the alarm system transferring (E808) to at least one resident of the building of a message identifying the device for detecting the position of a device for placing a window in at least three different states if the stored position corresponds to the second state.

4. Method according to Claim 2, **characterized in that** the remote device is a home automation gateway, and **in that** the method further includes the steps of:
- the home automation gateway receiving (E903) a frame via a radio module of the alarm system, the frame being transferred by the device for detecting the position of a device for placing a window in at least three different states and comprising an identifier of the device for detecting the position of a device for placing a window in at least three different states and also the position of the device for placing the window in at least three different states,
- the home automation system storing (E904) the identifier of the device for detecting the state of the window and the position of the device for placing the window in at least three different states,
- receiving (E905) a request to obtain the position of a device for placing a window in at least three different states,
- transferring (E906) an item of information identifying the device for detecting the position of a device for placing a window in at least three different states and also the stored position of the device for placing the window in at least three different states.

5. Method according to Claim 4, **characterized in that** the request to obtain the position of a device for placing a window in at least three different states is received by a smartphone, and **in that** the item of information identifying the device for detecting the position of a device for placing a window in at least three different states and also the stored position of the device for placing the window in at least three different states are transferred to the smartphone.

6. Method according to any one of Claims 3 to 5, **characterized in that**, prior to the transferring of each frame, the method includes the steps of:
- the device for detecting the position of the device for placing a window in at least three different states detecting a change in the position of the movable element,
- the device for detecting the position of a device for placing a window in at least three different states activating (E720) the radio module of the device for detecting the position of a device for placing a window in at least three different states before the frame is transferred if a change in the position of the movable element is detected,
- the device for detecting the state of the window device deactivating (E722) the radio module of the device for detecting the position of a device for placing a window in at least three different states after the frame has been transferred.

7. Method according to any one of Claims 2 to 6, **characterized in that** the device for detecting the position of the device for placing the window in at least three different states includes three sensors.

8. Method according to Claim 7, **characterized in that** the movable element is a magnet and the sensors are reed switches, each reed switch permitting or preventing electrical contact depending on whether or not the magnet is near the reed switch.

9. Method according to Claim 8, **characterized in that** the means for detecting a change in the position of the movable element by means of the device for detecting the position of the device for placing the window in at least three different states includes means for storing a position of the movable element obtained prior to the obtained position and for comparing the obtained position with the position of the movable element obtained prior to the obtained position.

10. Method according to Claim 9, **characterized in that** the positions adopted by the magnet depending on the position of the device for placing the window in the at least three different states are parallel to a plane on which the reed switches are arranged, a first position giving rise to electrical contact for every reed switch, a second position giving rise to electrical contact for only two reed switches, and a third position giving rise to electrical contact for just a single reed switch.

11. System for associating a device for detecting a position of a device for placing a window in at least two different states with a remote device via a radio link, **characterized in that** the system includes:
- means, included in the remote device, for placing the remote device in an association mode,
- means, included in the device for detecting a position of a device for placing a window in at least two different states, for detecting a first position of the device for placing a window in at least two different states, which position corresponds to the window being locked,
- means, included in the device for detecting a position of a device for placing a window in at least two different states, for activating a timeout of a predetermined duration,
- means, included in the device for detecting a position of a device for placing a window in at least two different states, for detecting a position different from the position that corresponds to the window being locked,
- means, included in the device for detecting a position of a device for placing a window in at least two different states, for transferring a frame, which includes the identifier of the device for detecting the position of a device for placing a window in at least two different states and an item of information representative of a request for association with the remote device, if the detection of the position that corresponds to the window being locked and the detection of the position different from the position that corresponds to the window being locked are performed at least three consecutive times during the predetermined duration,
- means, included in the remote device, for receiving the frame,
- means, included in the remote device, for associating the device for detecting the position of a device for placing a window in at least two states with the remote device.
